# EUROPEAN PATENT APPLICATION

(11) **EP 1 081 570 A1**
(43) Date of publication of application: **07.03.2001**
(21) Application number: 99202807.6
(22) Date of filing: 30.08.1999
(51) Int. Cl.: G05D 7/06

(54) **Fluid flow regulator and control method**

(71) Applicant: TeeJet Technologies, 9051 Gent (BE)
(72) Inventor: Maseri, Carmelo, 7740 Pecq (BE)
(74) Representative: Bird, William Edward

(57) **Abstract**

A fluid regulation system is described which includes at least two valves (31, 32) which are fluidly connected in parallel. A controller supplies power to the first valve (31) which regulates the flow during a low flw rate range. At higher flow rates, when the first valve (31) is fully open, the regulation is performed by the second valve (32).

## Description

The present invention relates generally to an apparatus and a method for controlling the flow of a fluid, in particular to the spraying of liquids such as the spraying of agricultural crops with water, pesticides, fertilizer, herbicides, etc. as well as other spraying applications such as the spraying of paints, solvents, washing or cleaning liquids.

### TECHNICAL BACKGROUND

The provision of fluid flow control systems often requires the control of varying flow rates of the fluid. The dynamic ratio of flow rates poses a problem to the flow design engineer. One approach is to provide a large capacity pump whose capacity is sufficient for the highest flow rate and then to regulate the flow to the required level. One way is to use a regulating valve (either pressure or volume regulation) which is matched to the capacity of the pump. This may be satisfactory at high flow rates but it is usually difficult to control low flow rates accurately with a large capacity regulator. Generally, a small change in a large capacity regulator will induce a relatively large change in flow rate. With closed loop feedback this may result in the phenomenon known as "hunting". The regulator can only provide a flow rate which is either above or below the set value. This means that the flow oscillates continuously with a period equal to the response time of the control system between the high value and low value, i.e. it "hunts" for the correct value but never finds it.

The problem is not solved by placing smaller regulating valves in parallel with each other. For instance, with two smaller regulators in parallel the flow rate is a combination of two flows and the change in flow rate is a combination of the changes induced by the two valves. A solution to this problem has been proposed in EP 636 959. A plurality of on-off (binary) valves are provided in parallel with a controllable valve. The flow rate is controlled either by operation of the controllable valve or by opening or closing a one of the on-off valves in parallel. This proposed system has the following disadvantages. Firstly, the operation of the binary valves causes a step-wise change in flow. This can be corrected to some extent by changing the setting of the controllable valve simultaneously with the opening or closing of a binary valve. However, the speed of the control valve must be high and this becomes increasing difficult as the size of this valve is increased. The known system is said to be suitable for laboratory use but and commercial scale operation, e.g. in an agricultural sprayer is not described. A second problem is that each on-off valve requires a separate control line in order to provide the signals necessary to switch the valve on and off. A contactless system could be envisaged, e.g. using infra-red transmission but this would require some power source at the valve or leading to the valve. Whatever system is used, a modification to the system, e.g. addition of another valve to increase flow, requires a complete change in the control system and additional wiring.

It is an object of the present invention to provide a control apparatus and method which combines both a wide and smooth dynamic range of flow rates as well as having improved flow control at low flow rates compared to the known systems.

It is a further object of the present invention to provide a flow control system for a fluid which allows changes to the components of the system without major changes in controllers or in the routing of wiring.

### SUMMARY OF THE INVENTION

According to an aspect of the present invention a fluid flow regulating system is provided with first and second controllable fluid flow regulators fluidly connected in parallel, and a controller for setting the flow rate through the regulators, wherein the system is adapted so that within a first flow rate range the first regulator regulates the fluid flow through the system and within a second flow rate range higher than said first flow rate range the second regulator regulates the fluid flow through the system while the first regulator remains in a constant substantially open condition. In accordance with a further embodiment of the present both flow regulators may regulate the fluid flow invention within an intermediate flow rate range. Preferably, the regulator controller is only connected directly to the first regulator. Any further regulator is joined by a jumper cable to the previous regulator in a chain of regulators.

The present invention may also provide a method of regulating fluid flow of first and second controllable fluid flow regulators connected fluidly in parallel and controlled by a controller for setting the flow rate through the regulators, comprising the steps of: providing power to the first regulator from the controller; the first regulator regulating the fluid flow within a first flow rate range; and the second regulator regulating the fluid flow at a second higher flow rate range while the first regulator is kept in a constant substantially open condition, a control signal to activate the second regulator during the second flow rate range being supplied from the first regulator.

According to yet another aspect of the present invention a controllable valve is provided with a fluid aperture, a valve member for variably closing the aperture, a drive mechanism for driving the valve member, a power input for providing power to activate the drive mechanism and a mechanism associated with the drive mechanism for transferring power from the power input to a power output of the valve only when the valve member is in a substantially open position.

The dependent claims define further independent embodiments of the present invention. The present invention will now be described in further detail, with reference to the following drawings.

### BRIEF DESCRIPTION OF THE DRAWINGS

Figs. 1A and 1B show serial and parallel fluid flow arrangements, respectively.

Fig. 2 shows a control arrangement for two regulating valves in accordance with an embodiment of the present invention.

Fig. 3A is a schematic representation of a valve regulator in accordance with an embodiment of the present invention.

Fig. 3B is a schematic representation of an embodiment of a regulator arrangement in accordance with the present invention using two ball valves.

Figs. 4 to 8 show schematic electrical circuit diagrams of a fluid regulation arrangement in accordance with an embodiment of the present invention.

Figs. 9 and 10 show schematic electrical circuit diagrams of a fluid regulation arrangement in accordance with a further embodiment of the present invention.

Fig. 11 shows flow test results on a fluid regulation arrangement in accordance with an embodiment of the present invention.

Fig. 12 shows flow test results on a fluid regulation arrangement in accordance with another embodiment of the present invention.

Fig. 13 shows a schematic electrical circuit diagram of a fluid regulation arrangement in accordance with a further embodiment of the present invention.

Fig. 14A shows a further schematic electrical circuit diagram of a fluid regulation arrangement in accordance with a further embodiment of the present invention.

Fig. 14B shows a schematic representation of the arrangement shown in Fig. 14A.

### DESCRIPTION OF THE ILLUSTRATIVE EMBODIMENTS

The present invention will be described with reference to certain embodiments and to certain drawings but the present invention is not limited thereto but only by the claims.

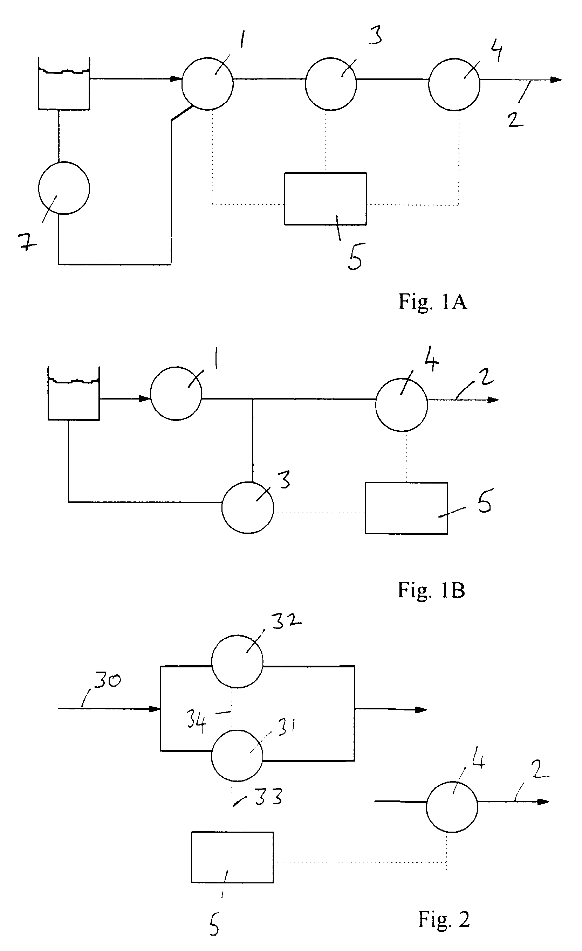

Figs. 1A and 1B show schematic representations of two flow control systems which may be used with the present invention. In Fig. 1A a pump 1 is shown which delivers fluid to an output line 2. A flow regulator 3 is provided in series with the pump 1. A flow measuring device 4 may be included in-line with the pump and the operation of regulator 3 may be controlled using negative feed-back from measuring device 4 using a controller 5 as is known to the skilled person. Optionally, the controller 5 may control the speed of operation of the pump 1. To prevent overloading the pump, a bypass line 6 may be provided with a pressure release valve 7. This system has the disadvantage that a change in flow rate can alter the output pressure of the pump which is an added variable which must be controlled.

In Fig. 1B the regulator 3 is placed in parallel with the pump 1. If required a flow measuring device 4 may be located in the outlet line 2 and the output signal from device 4 may be used to control the flow regulator 3, e.g. by means of a controller 5. This system has the advantage that the pump 1 may operate continuously at full speed and the amount of fluid delivered along line 2 is the difference between the output of the pump 1 and the flow through the regulator 3. This is a more stable operation of the system than in Fig. 1A as the pump load can be kept relatively stable. It also has the advantage that the fluid is continuously circulated which may prevent settling out of solid particles if these are present in the fluid.

An embodiment of the present invention will be described with reference to Figs. 2 to 8. In Fig. 2 two flow regulators 31, 32 are shown connected in parallel between a fluid input line 30 and a fluid output line 33. Controller 5 controls the operation of regulators 31 and 32. Controller 5 may receive a flow measurement value from flow measurement device 4 which may be located in the output line 2 which may be connected to output line 33 (series connection, see Fig. 1A) or to line 30 (parallel connection, see Fig. 1B). Preferably, there is a single cable connection 33 from the controller 5 to one of the regulators 31 and any additional regulator 32 is connected to the first one 31 by means of connecting cable 34. The present invention is not limited to two flow regulators 31, 32 in parallel but may include any number in parallel, each one connected via a connecting cable 34 to the previous flow regulator except for the first flow regulator 31 which is connected to controller 5. Hence, from the controller standpoint the present invention includes the connection of a linear chain of a plurality of flow regulators starting with the controller 5. This allows adding more regulators 31, 32 without additional cabling from the controller 5 which reduces the weight of the system and avoids changing or adding a new cable or cables in a cable harness between the controller 5 and each new regulator.

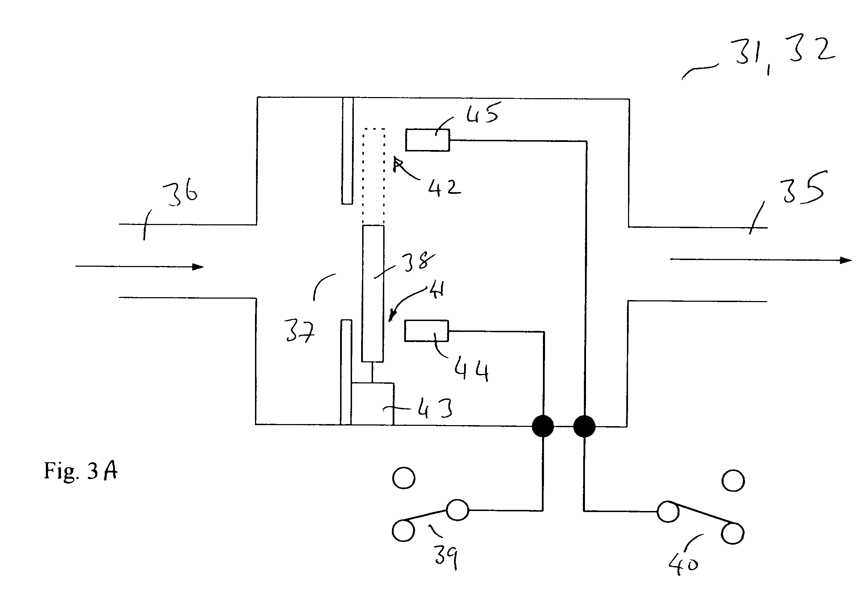

A flow regulator 31 or 32 is shown schematically in Fig. 3A. It includes a fluid inlet line 35 and outlet line 36. The fluid flow is controlled by means of a variable aperture 37 and a moveable valve diaphragm 38 which moves from a closed position 41 to an open position 42 (e.g. a ball valve). The diaphragm 38 is driven by a motor 43. Although the diaphragm is shown as being moved linearly the present invention is not limited thereto but includes other motions such as rotational. At the closed and open positions of diaphragm 38, switch sensors 44, 45, respectively are provided which sense when diaphragm 38 is in the closed and open position respectively and operate switches 39, 40 respectively. The switch sensors 44, 45 may be provided by cam followers driven by a cam attached to the drive of motor 43 and operating microswitches. The switch 39, 40 may be located on the regulator 31, 32 or may be located remotely therefrom.

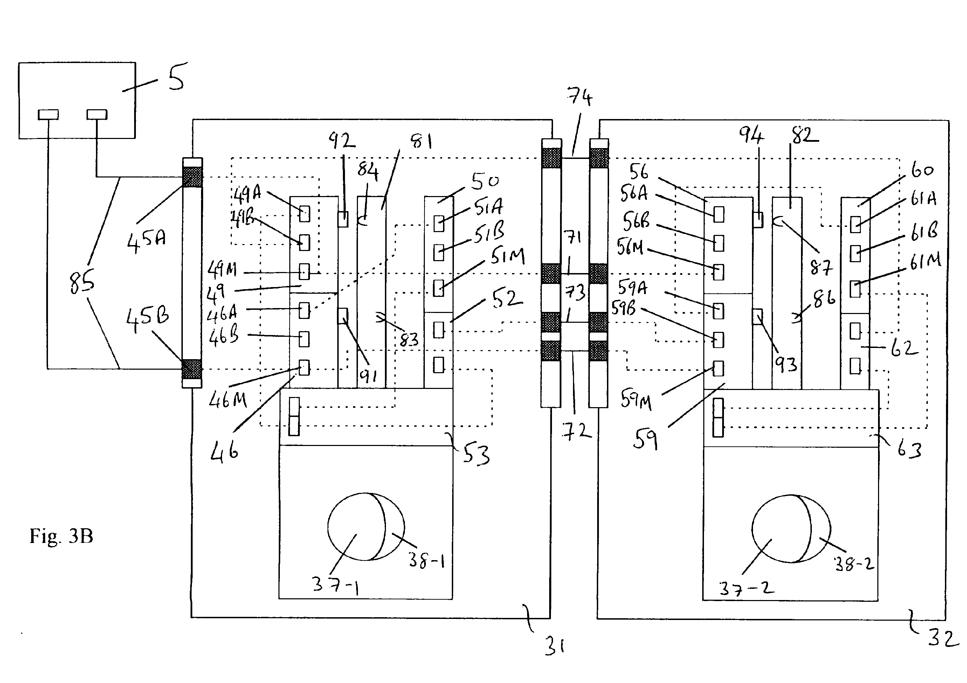

Fig. 3B shows a schematic representation of a regulator arrangement in accordance with an embodiment of the present invention. Two controllable valves 31, 32 are shown and a controller 5. The fluid inputs and fluid outputs of the two controllable valves 31, 32 are preferably ganged in parallel. The control connections from the controller to the first valve 31 and to the second valve 32 are preferably chained in series. This means that the controller 5 is connected to the valve 31 via connections 45A and 45B. There is no direct connection between controller 5 and valve 32. Instead, there is a four channel jumper connection 71, 72, 73, 74 between valve 31 and 32. Although not shown, the serial sequence of valves 31, 32 can be extended by a further valve connected to valve 32 and a further valve to that valve, and so on. The connections inside valves 31 and 32 are shown in Fig. 3B as dotted lines. They will be described in more detail with respect to Figs 2 to 10 for an electrical control system (i.e. cables or wires and control by voltage and/or current supplied from controller 5). The present invention is not limited to electrical or electronic control systems. The present invention is not limited by the control system, e.g. it may be a pneumatic control system. One aspect of the present invention is that the flow regulators such as valves 31, 32 of the present invention are fluidly connected together in a ganged parallel manner whereas the control connections (whether electrical, pneumatic or otherwise) between the valves and the controller 5 are chained in series.

Each of valves 31 and 32 may be a ball valve, for instance basically of the type Directovalve 38550 or 38440 as supplied by Tee-Jet Technologies of Sint-Denijs Westrem, Belgium but modified with the novel features for use in the present invention. Valve 31 is connected to controller 5 via cable 85 and connections 45A and 45B on valve 31. Valve 32 is connected by a four-core jumper cable 71, 72, 73, 74 to valve 31. The controller 5 may be a Tee-Jet 834 or 844 Sprayer Controller supplied by Tee-Jet of Sint-Denijs Westrem, Belgium. The regulator arrangement shown in Fig. 3B may be part of a Tee-Jet Precision Farming Sprayer Control System supplied by the same company. Alternatively, controller 5 may be a Tee-Jet Airmatic™ AirJet™ controller supplied by the same company when the fluid to be controlled by the valve 31, 32 is air.

Each valve 31, 32 has a variable aperture 37-1, 37-2, respectively closed by diaphragm (ball) 38-1, 38-2, respectively, which is driven by motor 53, 63 respectively. Each motor 53, 63 has a drive spindle or shaft 81, 82, respectively. On drive shaft 81 first and second cams 83, 84 are placed so that they operate lower and upper microswitches 46, 49, respectively when the drive shaft 81 is at the appropriate position. Microswitches 46, 49 have cam followers 91, 92 respectively which are moved by cams 83, 84 respectively to operate the microswitches 46, 49, respectively. On drive shaft 82 of valve 32, third and fourth cams 86, 87 are located for operating microswitches 59, 56 respectively via cam followers 93, 94 respectively. Each microswitch 46, 49, 56, 59 has a common terminal 46M, 49M, 56M, 59M, respectively as well as each having two poles 46A, 46B; 49A, 49B; 56A, 56B; 59A, 59B, respectively.

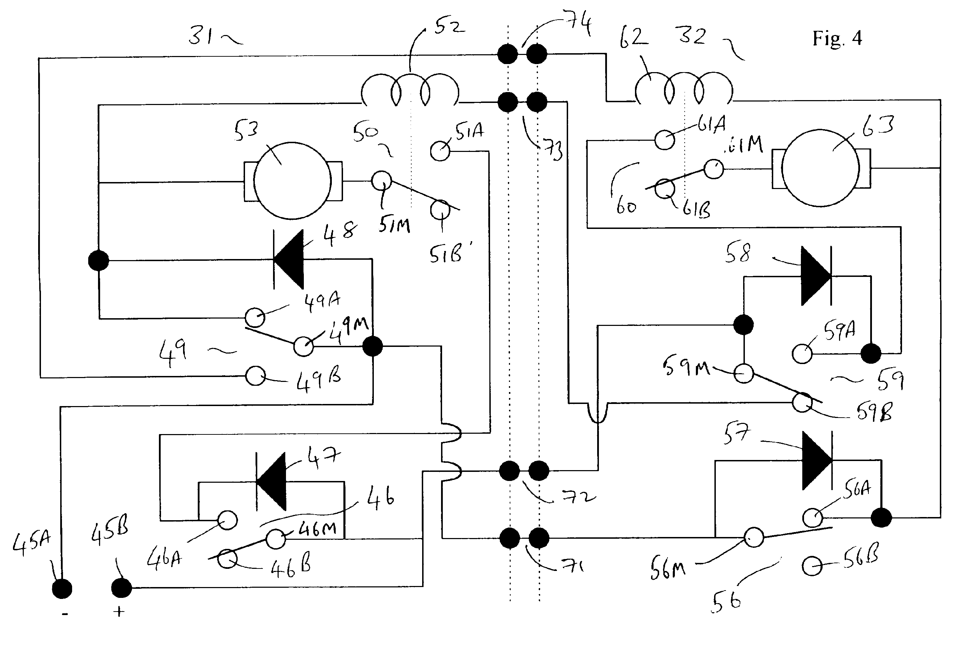

Each valve 31, 32 also has a relay switch 50, 52; 60, 62, respectively. Each relay switch 50, 52; 60, 62 has a relay 52; 62 and a switch 50, 60 which is operated when current passes through the relevant relay 52, 62. Each relay switch 50, 60 has poles 51A, 51B; 61A, 61B, respectively and a common pole 51M, 61M, respectively. Also included in the valves 31, 32 are diodes but these have been omitted for clarity reasons. The operation of these valves 31, 32 will now be described with reference to Figs. 4 to 10.

A schematic electric control circuit is shown in Fig. 4 for two regulators 31, 32 but the present invention is not limited to this circuit nor to two regulators nor to an electric control system. The logic of this circuit determines the activities in accordance with Table 1.

**Table I**

| Condition | Valve 31 | Valve 32 |
|---|---|---|
| low flow rates | open and regulating | closed |
| high flow rates | fully open and not regulating | open and regulating |

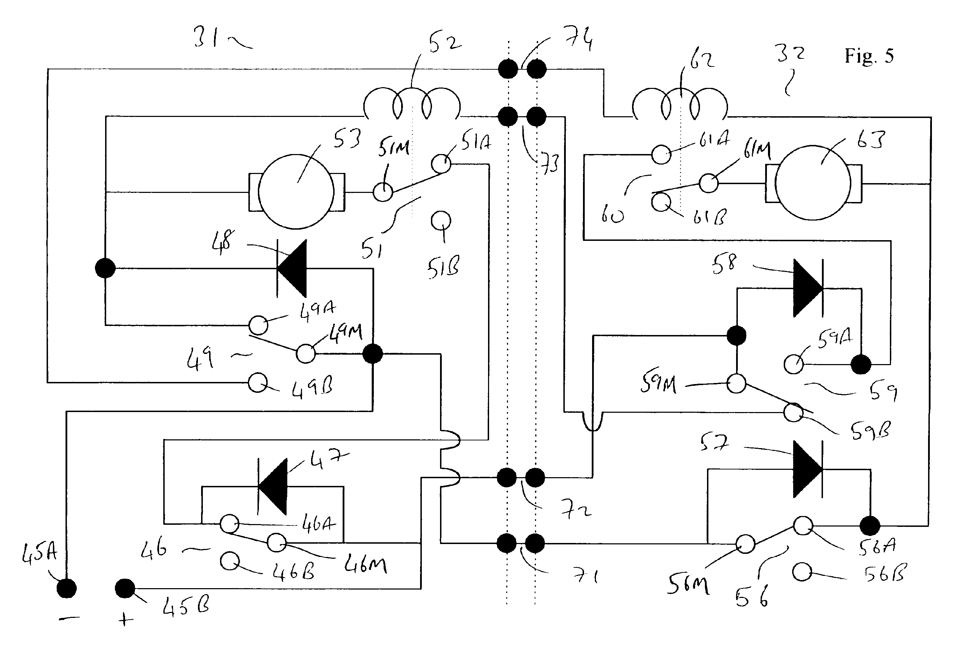

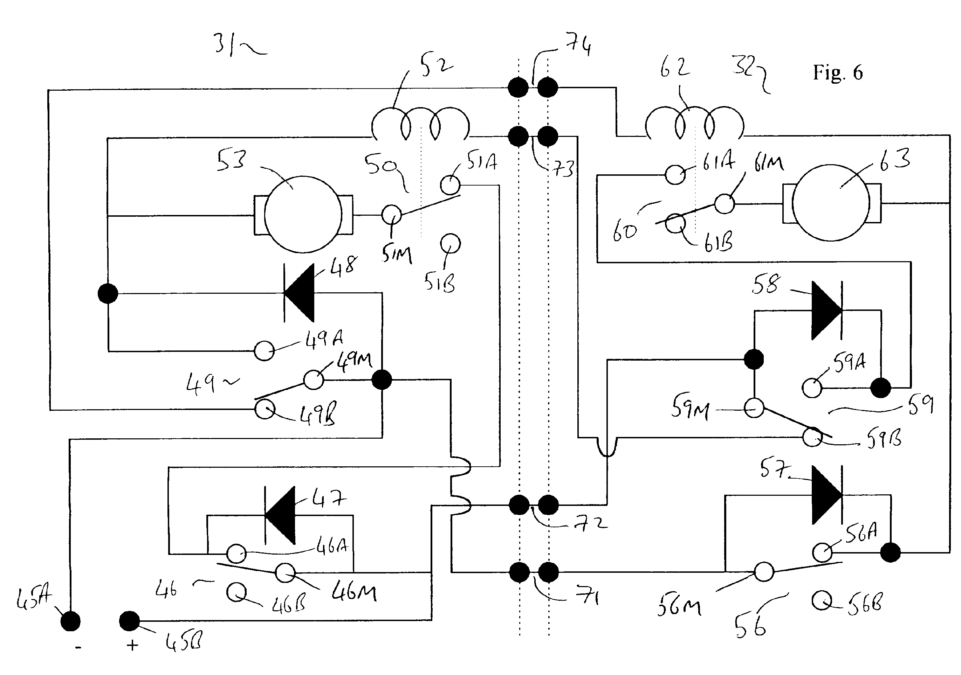

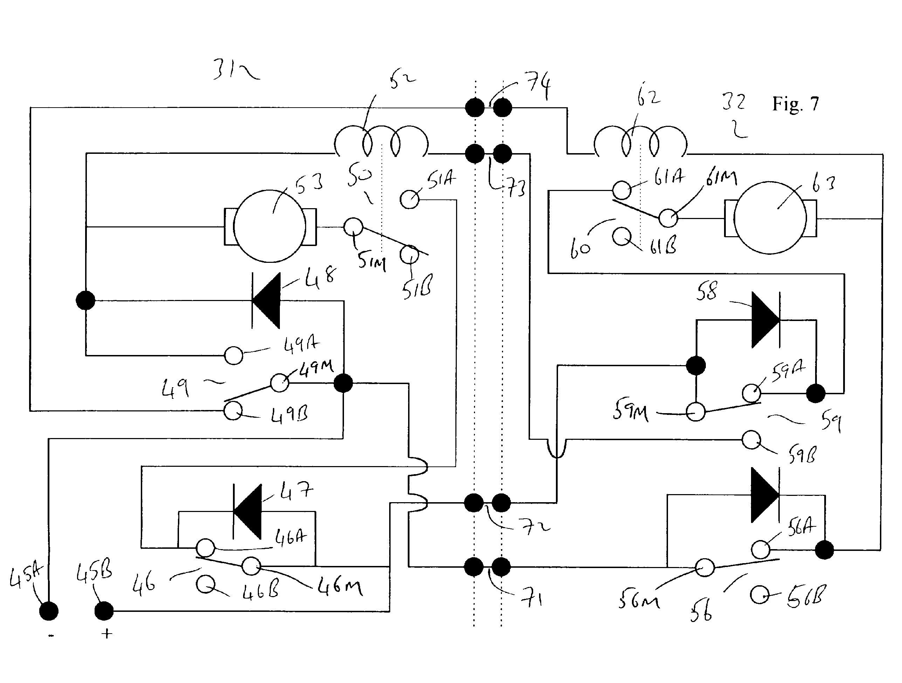

Each valve 31, 32 includes three switches 46, 49, 50; 56, 59, 60, two diodes 47, 48; 57, 58, one relay 52; 62 and one DC motor 53, 63, respectively. The two valves 31, 32 are joined together by a four core cable represented by 71-74. The control unit 5 is connected to valve 31 via connections 45A and 45B and provides DC voltage of either polarity. As shown in Fig. 4 each valve 31, 32 is completely closed. With respect to valve 31, the common terminal 46M of switch 46 is connected to pole 46B as the valve 31 is throttled back to its closed position. The common terminal 49M of switch 49 is connected to pole 49A and the common terminal 51M of switch 50 is connected to pole 51B. As shown in Fig. 4 with respect to valve 32, the common terminal 59M of switch 59 is connected to pole 59B as the valve 32 is throttled back to its closed position. The common terminal 56M of switch 56 is connected to pole 56A and the common terminal 61M of switch 60 is connected to pole 61B. When a positive voltage is applied to connection 45B and a negative voltage to connection 45A, current flows through switch 59, relay 52 and switch 49 to connection 45A. This pulls switch 50 to connect common terminal 51M to pole 51A. At this point current also flows through diode 47 via switch 50 through motor 53 and via switch 49 to connection 45A. This drives motor 53 to start opening valve 31. As this happens the first cam follower 91 slips off a first cam 83 on the motor drive shaft 81 of valve 31 causing the common terminal 46M of switch 46 to connect to pole 46A. This position is shown in Fig. 5. Now valve 31 can be driven open or closed by the relevant voltages on connections 45A and B. When valve 31 nears the completely open state the second cam follower 92 rides onto the second cam 84 on the drive shaft 81 of valve 31 which makes the common terminal 49M of switch 49 connect to pole 49B. Assuming that controller 5 continues to require more flow of fluid through regulators 31 and 32 a positive voltage stays on connection 45B and a negative one on connection 45A. This position is shown in Fig. 6. The change in switch 49 stops the motor 53 at the same time feeding voltage to one side of relay 62 of valve 32. The other side of relay 62 receives voltage via diode 58 and the relay 62 is activated changing the switch 60 so that the common terminal 61M contacts 61A. Now positive voltage is fed to motor 63 via diode 58 and negative voltage via switches 56 and 60. Motor 63 begins to turn in such a way that valve 32 starts to open. At this point the third cam follower 93 rides off the third cam 86 on the motor drive shaft 82 of valve 32 and switch 59 changes so that the common terminal 59M contacts pole 59A. The current feed to relay 52 is broken which causes the common terminal 51M of switch 51 to contact pole 51B. This position is shown in Fig. 7. Valve 32 is now driven open or closed by the relevant voltages on connections 45A and 45B while valve 31 remains fully open.

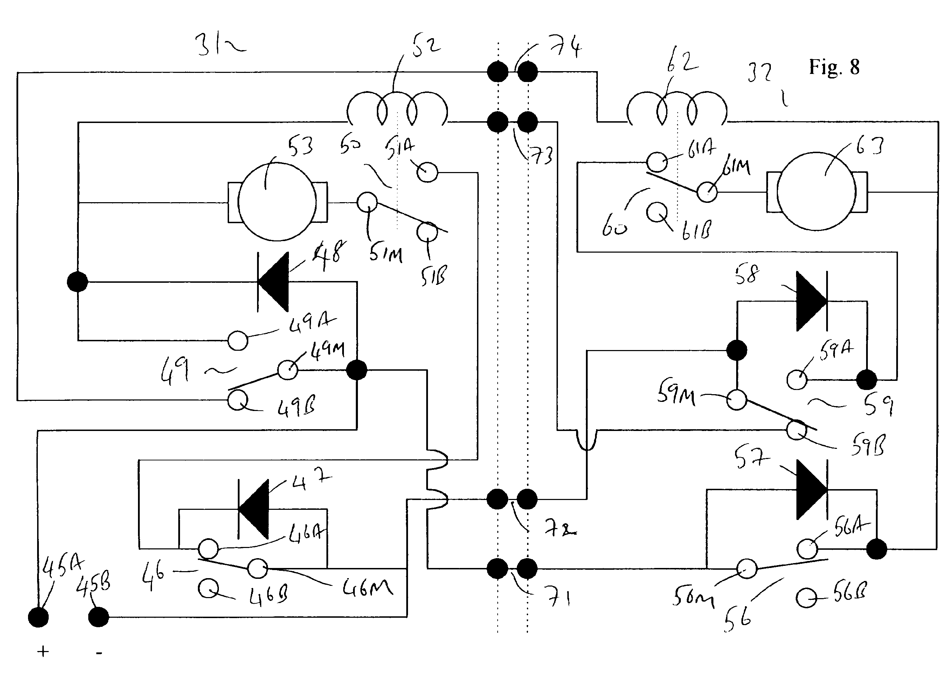

Assuming that the flow requirement drops significantly, valve 32 will close eventually. As the valve 32 is closing there is a negative voltage on connection 45B and a positive voltage on connection 45A. At a point as valve 32 is closing the third cam follower 93 rides up onto the third cam 86 on the drive shaft 82 of valve 32 causing the common terminal 59M of switch 59 to connect to pole 59B. The position is now shown in Fig. 8. This interrupts the current to motor 63 which stops. At the same time current flows through relay 52 via switches 49 and 59 causing switch 50 to move to connection 51A. The current flow through relay 62 is broken causing the common terminal 61M of switch 60 to contact pole 61B. Now current flows from connection 45A through diode 48 to motor 53 and from there via switches 50 and 46 to connection 45B. This drives motor 53 backwards, i.e. closing valve 31. As soon as this movement occurs the second cam follower 92 rides off the second cam 84 on the drive shaft 81 of motor 53 causing the common terminal 49M of switch 49 to contact pole 49A. The same position has now been reached as was described with respect to Fig. 5. Valve 32 is closed and valve 31 is regulating. Further reduction of flow requirement will close valve 31. At closing the first cam follower is operated by cam 83 and the common terminal 46M of switch 46 contacts pole 46B. The position as in Fig. 4 is now reached with both valves 31, 32 closed.

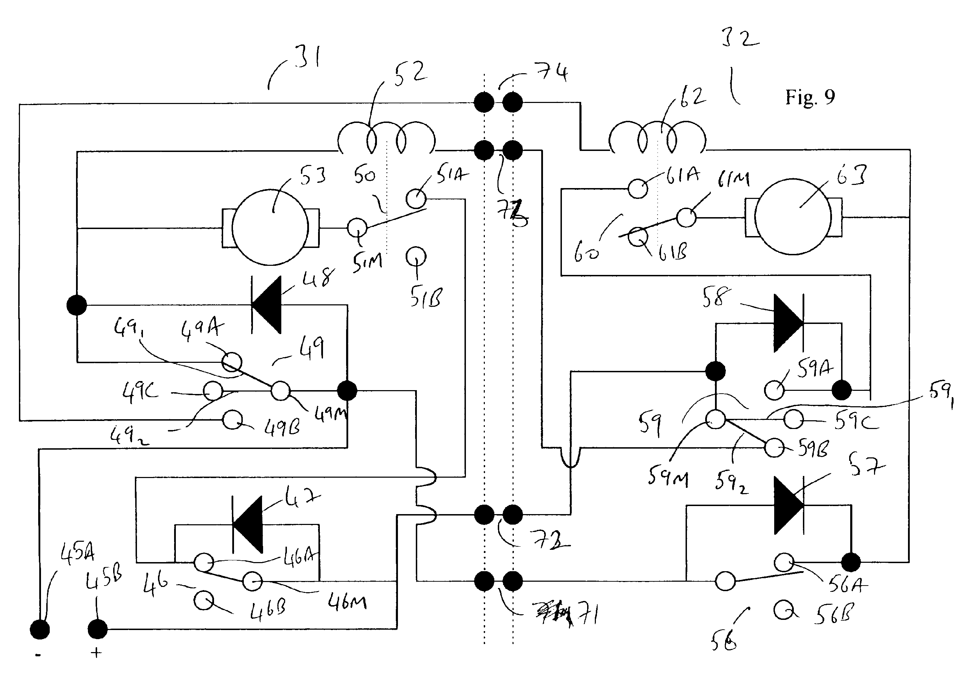

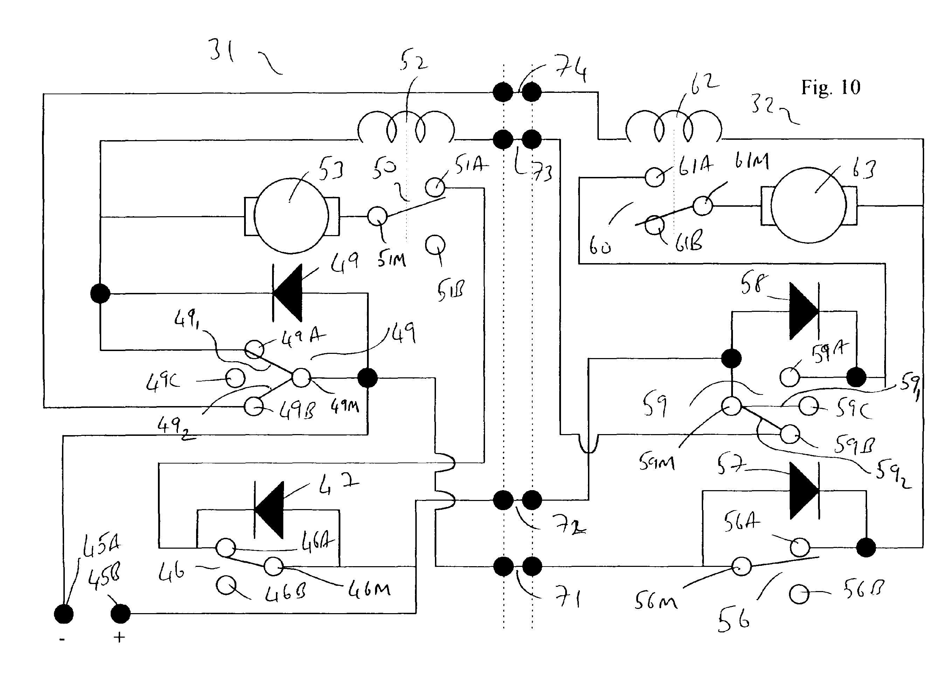

In the above embodiment, the valves 31, 32 regulate mutually exclusively, i.e. either the first (31) or the second (32) valve is regulating (see Table 1). The present invention is not limited thereto. Another embodiment is shown schematically in Figs. 9 and 10. The reference numbers in Figs. 9 and 10 which are the same as in Figs. 4 to 8 are the same components except for the following. Switches 49, 59 each includes two switches which operate at different times. This is represented by new poles 49C and 59C. The position in Fig. 9 is similar to the position in Fig. 5 in which valve 31 is regulating and valve 32 is closed. In switch 49 one connection (49₁) is connected between common terminal 49M and pole 49A, whereas a second connection (49₂) is connected between common terminal 49M and pole 49C, i.e. is open circuit. A similar situation exists with switch 59. As valve 31 opens there comes a point at which the second connection 49₂ is moved by a suitable cam on the motor drive and a cam follower to connect to pole 49B. This situation is shown in Fig. 10. Now current flows through both relays 52 and 62 so that switches 52, 62 are pulled to poles 51A and 61A respectively. Motor 62 is also driven through diode 58 and switch 56 so the motor 62 also begins to move. This activates a cam follower on the drive of the motor of valve 32 to move the connection 59₁ to pole 59A. Now both motor 53 and 63 are driving. When motor 53 reaches a completely open position, a cam follower is activated by a cam on the drive of valve 31 to move connection 49₁ to contact 49C. This stops motor 53 and no current flows through relay 52 so that switch 50 moves to pole 51B. A further cam follower and cam is provided on the drive of valve 32 which subsequently moves connection 59₂ to contact pole 59C. Hence, there is a period of overlap when both valves 31, 32 are regulating in parallel.

When the flow rate is decreasing the reverse procedure takes place and again an overlap occurs in which both valves 31, 32 are regulating in parallel for a short time. The regulation activity of this embodiment is shown in Table 2.

**Table 2**

| Condition | Valve 31 | Valve 32 |
|---|---|---|
| low flow rates | regulating | closed and not regulating |
| medium flow rates | regulating | regulating |
| high flow rates | open and not regulating | regulating |

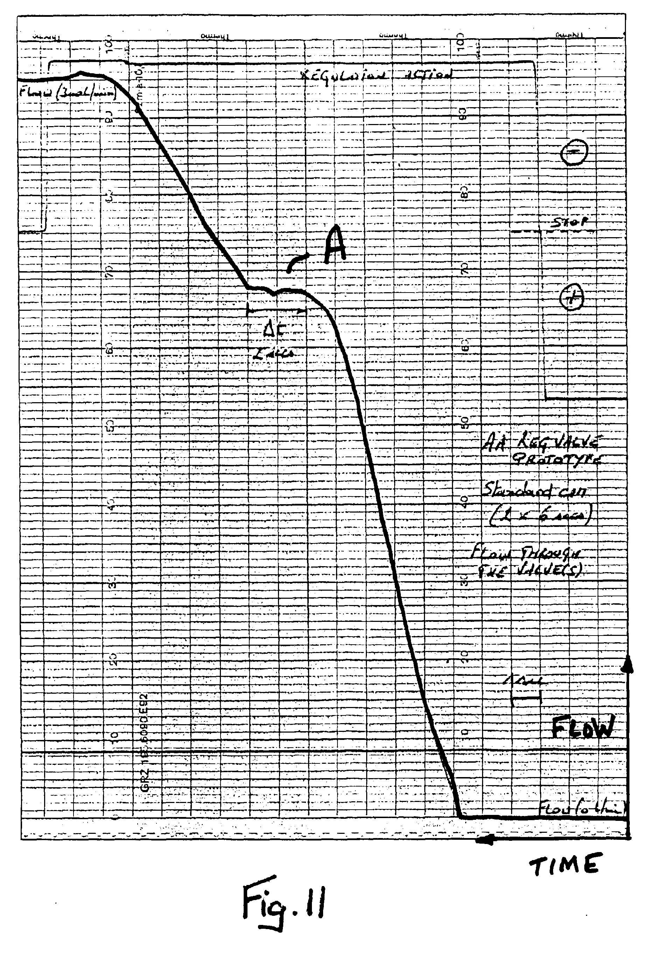

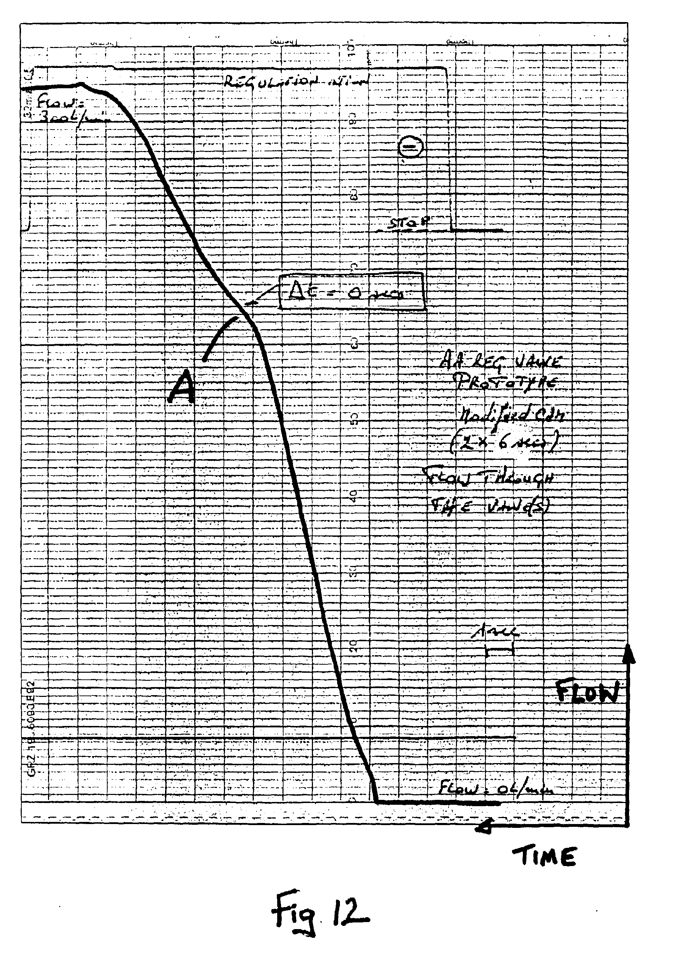

Flow test results for an arrangement with two valves similar to that described with reference to Figs. 3B and 4-8 is shown schematically in Figs. 11 and 12. Two regulating valves of the general type 38550 (or 38440) supplied by TeeJet Technologies of Sint-Denijs Westrem in Belgium were modified with diodes, relays and switches in accordance with Figs. 3B and 4. The fluid inputs and outputs of valves 31, 32 were arranged in parallel and started with both valves closed. The control input to the first valve 31 was then provided with a step voltage and the response of the system monitored. The flow response to the step voltage is shown in Fig. 11. It can be seen that the flow started at zero and rose more or less linearly with time until the point A is reached. At this point the first valve 31 is fully open and the control is passed to the second valve 32. As soon as the second valve 32 is operating normally the flow continues to increase more or less linearly with time until the specified flow is reached. There is a noticeable "flat spot" in the response curve at point "A". This can be substantially completely eliminated by modifying the opening and closing times of the balls 38-1, 38-2 of the two valves 31, 32. The flat spot is caused by the fact that the change of flow with movement of the drive motor of the first valve 31 is small when the valve is almost completely open. Similarly, as the second valve 32 starts to open there is a shallow flow/angular change of motor drive shaft characteristic. The operation of the second cam 84 of the first valve 32 was modified so that the control passed from the first valve 31 to the second valve 32 slightly before the first valve 31 was completely open. Similarly, the operation of the third cam 86 of the second valve 32 was modified so that in the closed position the ball 38-2 of the second valve 32 was not completely in the "home" position but rather slightly away from its seat. The results of these changes are that the first valve 31 regulates flow in the linear portion of Fig. 11 right up to the moment that the regulation is passed to the second valve 32 and the second valve 32 begins to allow a significant flow as soon as it begins to open. The revised flow response to a step function is shown in Fig. 12. The flat point "A" of Fig. 11 has been eliminated.

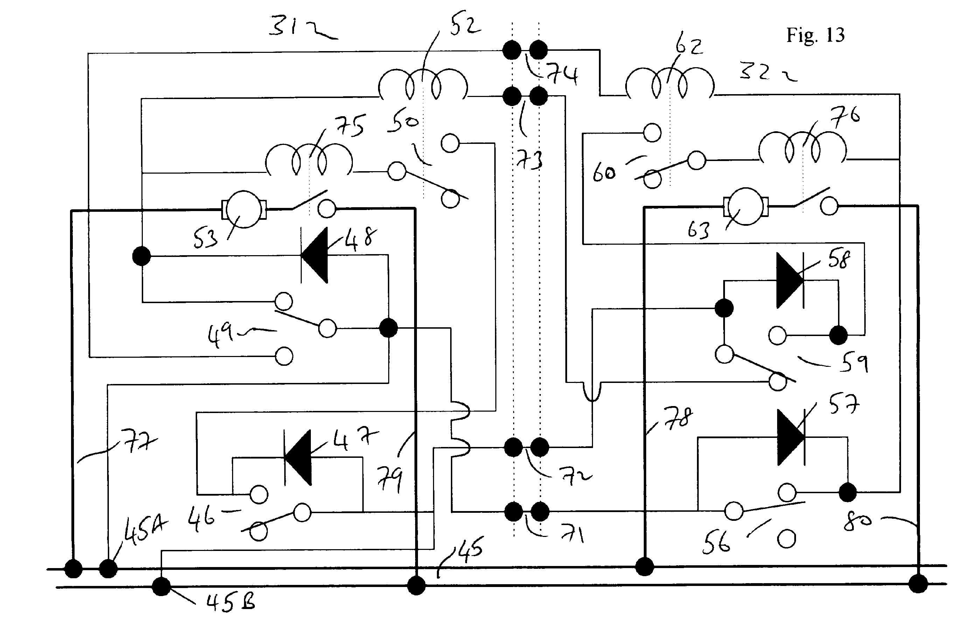

Fig. 13 shows a further fluid flow control arrangement in accordance with a further embodiment of the present invention. Fig. 13 is similar to Fig. 4 except that the motors 53 and 63 have been replaced by power relays 75, 76. The operation of the circuit is the same as previously described with reference to Figs. 4 to 8 except that the motors 53, 63 of valves 31, 32 respectively are driven on by closing the relevant switch of power relays 75, 76 respectively. The power for motors 53, 63 may be taken directly from the power bus 45 via cables 77, 79; 78, 80. In this way the main motor current does not pass through switches 46, 49, 56, 59 which may, therefore, be light duty microswitches. This arrangement is particularly suitable when the power consumption of the motor drives 53, 63 of valves 31, 32 is high.

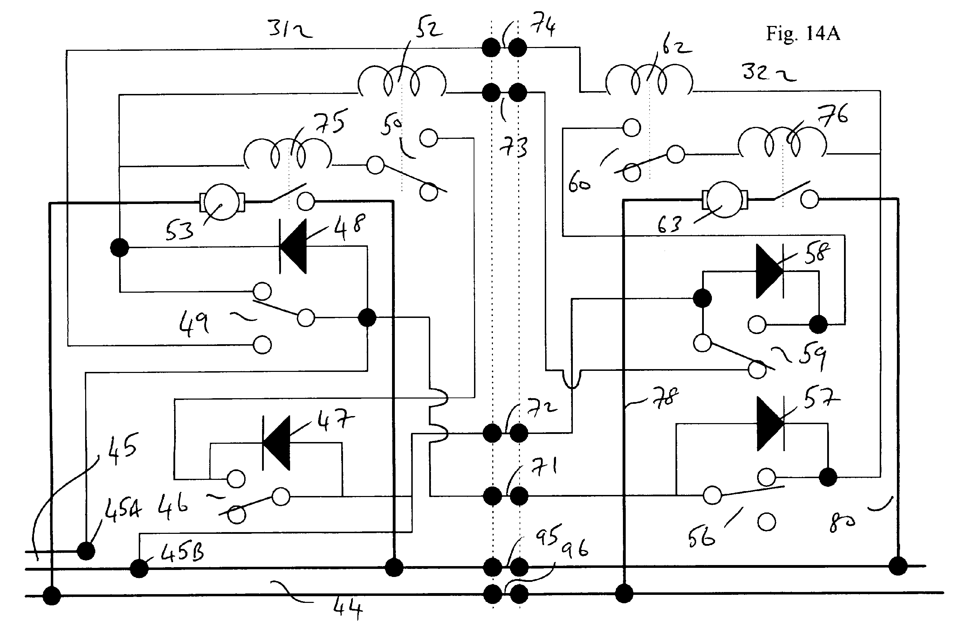

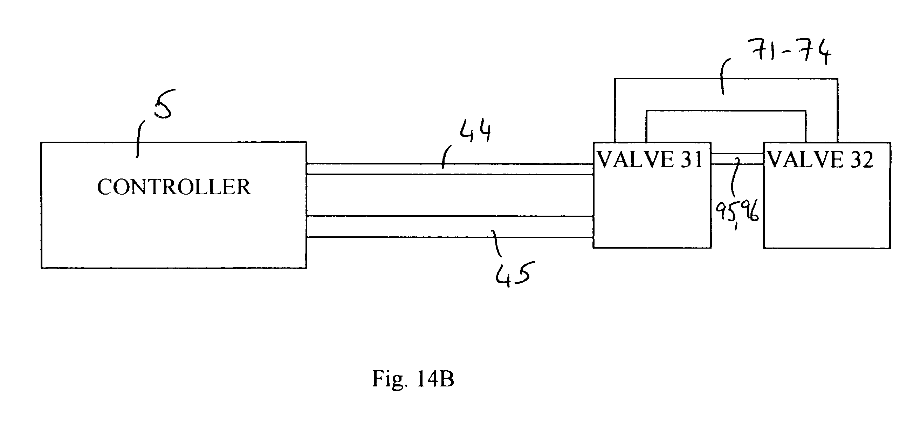

For even higher motor currents, the microswitches 46, 49, 56, 59 may be fed by a separate low voltage control voltage whereas the motors 53, 63 are driven by a higher voltage. As an example, the motors 53, 63 may be driven by a 24 volts DC variable controller 5 and the microswitches by 5V DC which may be tapped off the 24V supply. Such a system is shown schematically in Figs. 14A and 14B. Fig. 14A is similar to Fig. 13 except the switches 46, 49, 56, 59 now have a separate power supply 45. As shown in Fig. 14B, the controller 5 supplies variable 24 V DC and a low voltage supply 45 (e.g. 5V) to valve 31 and via six-core cable 71-74, 95, 96 to valve 32. The low voltage supply 45 drives the microswitches 46, 49, 56, 59. The low voltage supply 45 changes from positive to negative voltage at the same time as the 24 V supply 44.

The embodiments of the present invention may be advantageously used with spraying equipment for agricultural use, e.g. spray booms towed behind or carried on tractors for spraying pesticides, herbicides, water, fertilizers and such like. The novel valve arrangement may be used with both liquids and gases. For example, where spraying is carried out by mixing pressurized air and a liquid in a nozzle, the control of the air and/or the control of the liquid may be carried out by a multi-valve control arrangement in accordance with the present invention.

While the invention has been shown and described with reference to preferred embodiments, it will be understood by those skilled in the art that various changes or modifications in form and detail may be made without departing from the scope and spirit of this invention as defined in the attached claims.

## Claims

1. A fluid flow regulating system comprising: a first and a second controllable fluid flow regulators fluidly connected in parallel; and a controller for setting the flow rate through the regulators and thereby to control the flow rate through the system, wherein the system is adapted so that within a first flow rate range the first regulator regulates the fluid flow through the system and within a second flow rate range higher than said first flow rate range the second regulator regulates the fluid flow through the system while the first regulator remains in a constant substantially open condition.

2. The fluid flow regulating system according to claim 1, wherein the system is further adapted so that: within a third flow rate range through the system both the first and second flow regulators regulate the fluid flow.

3. The fluid flow regulating system according to claim 1 or 2, wherein the controller is connected for transmission of control signals directly to the first regulator but not directly to the second regulator.

4. The fluid flow regulating system according to any previous claim, wherein the first regulator is connected to the second regulator for transmission of control signals from the controller to the second regulator via the first regulator.

5. The fluid flow regulating system according to any previous claim, wherein at least one of the first and second regulators has a variable aperture for controlling the fluid flow and a valve mechanism for opening and closing the aperture, and first and second sensors, the first sensor sensing either directly or indirectly when the aperture of the regulator is in a substantially closed position and the second sensor sensing either directly or indirectly when the aperture is in a substantially open position.

6. The fluid flow regulating system according to claim 5, wherein the valve mechanism comprises a drive mechanism and the first and second sensors sense the position of the drive mechanism.

7. The fluid flow regulating system according to claim 5 or 6, wherein the first and second sensors activate first and second switches, respectively, the first and second switches being arranged so that operation of the switches causes the flow control to pass from the first to the second regulator at the change from the first to the second flow rate range.

8. The fluid flow regulating system according to any previous claim adapted for spraying agricultural fluids.

9. A method of regulating fluid flow of first and second controllable fluid flow regulators connected fluidly in parallel and controlled by a controller for setting the flow rate through the regulators, comprising the steps of:
providing power to the first regulator from the controller; the first regulator regulating the fluid flow within a first flow rate range; and
the second regulator regulating the fluid flow within a second higher flow rate range while the first regulator is kept in a constant substantially open condition, a signal for activating the second regulator during the second flow rate range being supplied from the first regulator.

10. The fluid flow regulating method according to claim 9, further comprising the step of: using both the first and second flow regulators to regulate the fluid flow within a third flow range intermediate the first and second flow ranges.

11. A controllable valve comprising a fluid aperture, a valve member for variably closing the aperture, a drive mechanism for driving the valve member, a power input for providing power to activate the drive mechanism and a first mechanism associated with the drive mechanism for transferring power from the power input to a power output of the valve only when the valve member is in a substantially open position.

12. The controllable valve according to claim 11, further comprising a second mechanism for interrupting the supply of power to the drive mechanism when the power from the power input of the valve is supplied to the power output.
